# EUROPÄISCHE PATENTANMELDUNG

(11) **EP 3 842 008 A1**
(43) Veröffentlichungstag der Anmeldung: **30.06.2021**
(21) Anmeldenummer: 20215792.1
(22) Anmeldetag: 18.12.2020
(51) Int. Cl.: A61C 11/02, A61C 13/00, B33Y 80/00

(54) **ARTIKULATOR**

(30) Priorität: 14.09.2020 DE 202020003948 U
(71) Anmelder: Zfx Süd GmbH, 85221 Dachau (DE)
(72) Erfinder: FRICKE Manuel, 86316 Friedberg (DE)
(74) Vertreter: Rummler, Felix

(57) **Zusammenfassung**

Es ist gezeigt ein Artikulator zur Simulation einer Kiefergelenksbewegung, der Artikulator umfassend ein erstes Artikulatorelement (1) und ein zweites Artikulatorelement (2), wobei das erste Artikulatorelement (1) ein Eingreifmittel (3) umfasst und das zweite Artikulatorelement (2) eine Aufnahme (4) für das Eingreifmittel (3) umfasst.

## Beschreibung

Die Erfindung betrifft einen Artikulator zur Simulation einer Kiefergelenksbewegung, der Artikulator umfassend ein erstes Artikulatorelement und ein zweites Artikulatorelement.

An derartige Artikulatoren werden üblicherweise Gipsmodelle der Zahnbögen des Ober- und Unterkiefers in Okklusion montiert. Anschließend kann über den Artikulator die Bewegung der Kiefer zueinander simuliert werden, was für die Fertigung von Zahnersatz, Teil- und Totalprothesen oder Schienen unerlässlich ist. In der modernen Zahnmedizin werden immer häufiger digitale Abdrücke der Kiefer angefertigt. An Hand der dabei generierten digitalen Daten kann ein digitales 3D-Kiefermodell oder Kieferteilmodell erstellt werden. Diese Modelle werden üblicherweise mittels 3D-Drucktechnik gefertigt. Anschließend müssen diese gedruckten Ganzkiefer- oder Teilmodelle anschließend wie die herkömmlichen Gipsmodelle an den Artikulator montiert werden.

Der vorliegenden Erfindung liegt die Aufgabe zugrunde, einen einfach herstellbaren Artikulator zu schaffen sowie die Fertigung eines Artikulators mit angebrachten Kiefer- oder Kieferteilmodellen zu erleichtern.

Die Lösung diese Aufgabe besteht bei dem Artikulator der eingangs erwähnten Art insbesondere darin, dass das erste Artikulatorelement ein Eingreifmittel umfasst und das zweite Artikulatorelement eine Aufnahme für das Eingreifmittel umfasst.

Das erste Artikulatorelement kann beispielsweise mit einem Oberkiefer(teil)modell verbunden werden. Das zweite Artikulatorelement kann beispielsweise mit einem Unterkiefer (teil)modell verbunden werden. Die Erfindung beruht auf der Erkenntnis, dass ein derartiger Artikulator auf einfache Weise, beispielsweise mittels 3D-Drucktechnik oder Frästechnik, herstellbar ist. Ein solcher Artikulator benötigt ferner keine weiteren Bauteile, um das ersten Artikulatorelement mit dem zweiten Artikulatorelement zu verbinden. Hierdurch sind das erste und zweite Artikulatorelement auf einfache Weise verbindbar, insbesondere lösbar verbindbar.

In einer Ausgestaltung ist vorgesehen, dass das erste Artikulatorelement und/oder das zweite Artikulatorelement einstückig ausgebildet ist. Hierdurch entfällt ein nachträgliches Zusammenfügen mehrerer Bauteile eines Artikulatorelements, wodurch die Herstellung, insbesondere die Herstellung mittels 3D-Drucktechnik, weiter vereinfacht ist.

In einer Ausgestaltung ist vorgesehen, dass das mit dem zweiten Artikulatorelement verbundene erste Artikulatorelement relativ zu dem zweiten Artikulatorelement in eine Protrusionsrichtung bewegbar ist und/oder in eine Laterotrusionsrichtung bewegbar ist.

Beispielsweise sind das erste Artikulatorelement und das zweite Artikulatorelement über eine Verbindung des Eingreifmittels und der Aufnahme miteinander verbunden. Beispielsweise können das erste Artikulatorelement und das zweite Artikulatorelement über ein Eingreifen des Eingreifmittels in die Aufnahme verbunden werden. Ferner kann eine Bewegung des ersten Artikulatorelements relativ zu dem zweiten Artikulatorelement in eine Protrusionsrichtung und/oder in eine Laterotrusionsrichtung über eine entsprechende Bewegung, beispielsweise über eine Translationsbewegung bzw. einer Rotationsbewegung, des Eingreifmittels relativ zu bzw. innerhalb der Aufnahme erreicht werden. Damit behält der einfach herzustellende Artikulator die für die Simulation der Kieferbewegung notwendige Bewegungsfreiheit bzw. notwendigen Bewegungsfreiheitsgrade.

In einer Ausgestaltung ist vorgesehen, das mit dem zweiten Artikulatorelement verbundene erste Artikulatorelement relativ zu dem zweiten Artikulatorelement in eine Rotationsrichtung rotierbar ist, insbesondere um eine Rotationsachse rotierbar ist, wobei die Rotationsachse senkrecht zu der oder einer Protrusionsrichtung und/oder senkrecht zu der oder einer Laterotrusionsrichtung angeordnet ist oder wobei die Rotationsachse parallel zu der oder einer Laterotrusionsrichtung angeordnet ist.

Beispielsweise ist das erste Artikulatorelement relativ zu dem zweiten Artikulatorelement um eine erste Rotationsachse zur Simulation einer Kieferöffnung bzw. -schließung rotierbar. Die erste Rotationsachse ist beispielsweise senkrecht zu der Protrusionsrichtung und senkrecht zu einer Längsrichtung der Artikulatorelemente ausgebildet.

Ferner ist das erste Artikulatorelement relativ zu dem zweiten Artikulatorelement beispielsweise um eine zweite erste Rotationsachse zur Simulation einer seitlichen, d.h. in Laterotrusionsrichtung zeigende, Kieferbewegung rotierbar. Die zweite Rotationsache kann senkrecht zur ersten Rotationsachse und senkrecht zur Längsrichtung der Artikulatorelemente ausgebildet sein.

In einer Ausgestaltung ist vorgesehen, dass das Eingreifmittel selbsthaltend in der Aufnahme anbringbar ist. Damit sind keine weiteren Mittel für die Fixierung des ersten Artikulatorelements an dem zweiten Artikulatorelement notwendig und die Fertigung des Artikulators weiter vereinfacht.

In einer Ausgestaltung ist vorgesehen, dass die Aufnahme länglich ausgebildet ist, insbesondere wobei die Aufnahme entlang oder parallel zu der oder einer Protrusionsrichtung angeordnet ist. Dies ermöglicht auf einfache Weise die Protrusionsbewegung des ersten Artikulatorelements relativ zum zweiten Artikulatorelement.

In einer Ausgestaltung ist vorgesehen, dass das Eingreifmittel kugelförmig ausgestaltet ist. Dies ermöglicht auf einfache Weise eine Rotationsbewegung um zumindest eine Rotationsachse, insbesondere um die erste und zweite Rotationsachse, des ersten Artikulatorelements relativ zum zweiten Artikulatorelement.

In einer Ausgestaltung ist vorgesehen, dass das zweite Artikulatorelement eine Öffnung umfasst und das Eingreifmittel über die Öffnung in der Aufnahme anbringbar und/oder in die Aufnahme einführbar ist, insbesondere wobei das Eingreifmittel über die Öffnung in der Aufnahme einrastbar ist. Hierdurch ist auf eine Weise eine lösbare Verbindung des ersten Artikulatorelements mit dem zweiten Artikulatorelement geschaffen.

In einer Ausgestaltung ist vorgesehen, dass die Öffnung einen ersten Öffnungsdurchmesser umfasst, der kleiner ist als ein Durchmesser des Eingreifmittels, insbesondere wobei die Öffnung trichterförmig ausgebildet ist und/oder wobei die Öffnung einen zweiten Öffnungsdurchmesser umfasst, der größer ist als ein Durchmesser des Eingreifmittels.

Insbesondere ist in einer Ausgestaltung vorgesehen, dass das erste Artikulatorelement und/oder das zweite Artikulatorelement zumindest teilweise aus einem elastischen Material gefertigt ist, insbesondere wobei das Eingreifmittel und/oder die Öffnung und/oder ein die Öffnung umfassender Teil des zweiten Artikulatorelements aus dem elastischen Material gefertigt ist.

Dies ermöglicht eine Quetschung bzw. Verformung der Öffnung und/oder des Eingreifmittels bei dem bzw. vor dem Eingreifen des Eingreifmittels in die Aufnahme. Die Quetschung bzw. das Eingreifen des Eingreifmittels in die Aufnahme kann das Aufbringen einer Verformungskraft erfordern. Diese Verformungskraft wird beispielsweise bei der Herstellung des Artikulators bzw. bei dem Zusammenfügen des ersten und des zweiten Artikulatorelements aufgebracht. Die Verformungskraft kann zu groß sein, als dass diese im üblichen Gebrauch des Artikulators an der Öffnung und/oder an dem Eingreifmittel anliegt. Derart ist das Eingreifmittel in der Aufnahme bzw. das erste Artikulatorelement an dem Artikulatorelement selbsthaltend angebracht bzw. mit diesem selbsthaltend verbunden.

In einer Ausgestaltung ist vorgesehen, dass das erste Artikulatorelement und/oder das zweite Artikulatorelement mittels 3D-Drucktechnik und/oder mittels Frästechnik gefertigt ist.

In einer Ausgestaltung ist vorgesehen, dass das erste Artikulatorelement mit einem ersten Kieferteilmodell verbindbar oder verbunden, insbesondere einstückig verbunden, ist und/oder wobei das zweite Artikulatorelement mit einem zweiten Kieferteilmodell verbindbar oder verbunden, insbesondere einstückig verbunden, ist. Beispielsweise ist das erste Kieferteilmodell ein Modell oder Teilmodell eines Oberkiefers und das zweite Kieferteilmodell ein Modell oder Teilmodell eines Unterkiefers.

In einer Ausgestaltung ist vorgesehen, dass der Artikulator zwei erste Artikulatorelemente und zwei zweite Artikulatorelemente umfasst, wobei die zwei ersten Artikulatorelemente jeweils mit dem oder einem ersten Kieferteilmodell verbindbar oder verbunden, insbesondere einstückig verbunden, sind und wobei die zwei zweiten Artikulatorelemente jeweils mit dem oder einem zweiten Kiefermodell verbindbar oder verbunden, insbesondere einstückig verbunden, sind. Derart kann Bewegung eines Oberkiefers relativ zu einem Unterkiefer mittels zwei, jeweils an dem Ober- und Unterkiefer angebrachten Artikulatoren simuliert werden.

Gemäß eines weiteren, möglicherweise eigenständigen Aspekts der Erfindung ist vorgesehen ein computerimplementiertes Verfahren zur Herstellung eines Artikulators, insbesondere zur Herstellung eines der oben beschriebenen Artikulatoren, das Verfahren umfassend: Erstellen eines ersten digitalen 3D-Artikulatormodells und/oder Erstellen eines zweiten digitalen 3D-Artikulatormodells; Drucken des ersten/und oder des zweiten digitalen 3D-Artikulatormodells mittels 3D-Drucktechnik. Das gedruckte erste Artikulatormodell kann dem ersten Artikulatorelement entsprechen. Das gedruckte zweite Artikulatormodell kann dem zweiten Artikulatorelement entsprechen.

In einer Ausgestaltung ist vorgesehen, dass das Verfahren ferner umfasst: Erstellen eines ersten digitalen 3D-Kieferteilmodels und/oder Erstellen eines zweiten 3D-Kieferteilmodels, wobei das erste digitale 3D-Kieferteilmodell mit dem ersten digitalen 3D-Artikulatormodell verbunden oder verbindbar ist und/oder wobei das zweite digitalen 3D-Kieferteilmodell mit dem zweiten digitalen 3D-Artikulatormodell verbunden oder verbindbar ist, insbesondere wobei das Verfahren ferner umfasst das Verbinden des ersten digitalen 3D-Kieferteilmodells mit dem ersten digitalen 3D-Artikulatormodell und/oder das Verbunden des ersten digitalen 3D-Kieferteilmodells mit dem ersten digitalen 3D-Artikulatormodell; wobei das Drucken des ersten/und oder des zweiten digitalen 3D-Artikulatormodells das Drucken, insbesondere einstückige Drucken, des ersten digitalen 3D-Kieferteilmodells und des ersten digitalen 3D-Artikulatormodells und/oder das Drucken, insbesondere einstückiges Drucken, des zweiten digitalen 3D-Kieferteilmodells und des zweiten digitalen 3D-Artikulatormodells umfasst.

Das gedruckte erste digitalen 3D-Kieferteilmodel kann dem ersten Kieferteilmodell entsprechen. Das gedruckte zweite digitalen 3D-Kieferteilmodel kann dem zweiten Kieferteilmodell entsprechen.

Hierdurch entfällt die Notwendigkeit, ein Kieferteilmodell nach der Fertigung des Kieferteilmodells und des Artikulatorelements an das Artikulatorelement anzubringen. Hierdurch wird der Herstellungsprozess vereinfacht, insbesondere Kosten-, Material- und Zeitaufwand verringert.

Gemäß eines weiteren, möglicherweise eigenständigen Aspekts der Erfindung ist vorgesehen ein System zur Datenverarbeitung, umfassend Mittel zur Ausführung eines der oben beschriebenen Verfahren.

Gemäß eines weiteren, möglicherweise eigenständigen Aspekts der Erfindung ist vorgesehen ein computerlesbares Speichermedium, umfassend Befehle, die bei der Ausführung durch das System dieses veranlassen, eines der oben beschriebenen Verfahren auszuführen.

Nachstehend wird die Erfindung anhand mehrerer bevorzugter Ausführungsbeispiele noch näher beschrieben.

Es zeigt:
- Fig. 1 und 5: einen Artikulator in dreidimensionaler Ansicht,
- Fig. 2-4 und 10: jeweils eine Schnittdarstellung des Artikulators in Seitenansicht,
- Fig. 6: eine Seitenansicht des mit einem ersten und zweiten Kieferteilmodells verbundenen Artikulators,
- Fig. 7: eine dreidimensionale Ansicht des mit dem einem und zweiten Kieferteilmodell verbundenen Artikulators,
- Fig. 8: eine dreidimensionale Ansicht zweier jeweils mit einem ersten und zweiten Kieferteilmodells verbundenen Artikulatoren in vollständig geöffnetem Zustand,
- Fig. 9: eine dreidimensionale Ansicht zweier jeweils mit dem ersten und zweiten Kieferteilmodell verbundenen Artikulatoren in teilweise geöffnetem Zustand.
- Fig. 11: ein Flussdiagramm eines Verfahrens zur Herstellung eines Artikulators und/oder eines mit einem oder mehrerer Kiefermodellen verbundenen Artikulators.

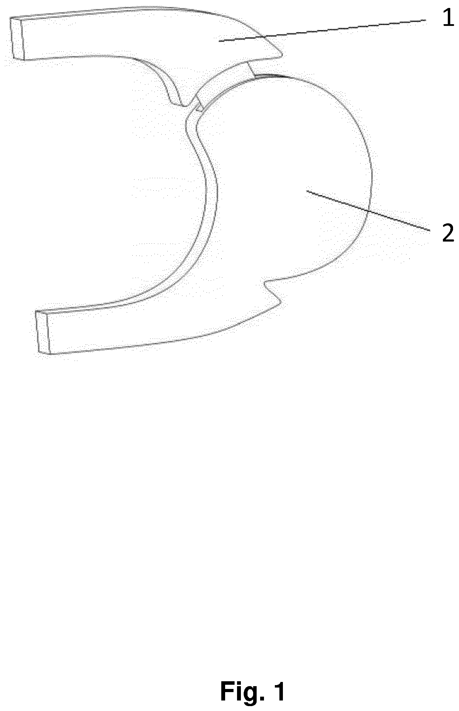

Die Figuren 1-5 und 10 zeigen einen Artikulator zur Simulation einer Kiefergelenksbewegung. Gleiche oder ähnliche Merkmale sind mit gleichen Bezugszeichen versehen. Der Artikulator umfasst ein erstes Artikulatorelement 1 und ein zweites Artikulatorelement 2. Beispielsweise besteht der Artikulator aus dem ersten und zweiten Artikulatorelement 1 und 2.

Das erste Artikulatorelement 1 umfasst ein Eingreifmittel 3. Das Eingreifmittel 3 kann kreisförmig oder kugelförmig ausgestaltet sein. Das Eingreifmittel 3 kann insbesondere ein Kugelkopf sein. Ferner kann zumindest ein Querschnitt des Eingreifmittels 3 kugelförmig bzw. kreisförmig ausgestaltet sein.

Das erste Artikulatorelement 1 und das zweite Artikulatorelement 2 sind länglich ausgebildet. Insbesondere umfasst das erste Artikulatorelement 1 und das zweite Artikulatorelement 2 jeweils einen länglich ausgebildeten Abschnitt. Die jeweiligen länglichen Abschnitte des ersten Artikulatorelements 1 und des zweiten Artikulatorelements 2 können im zusammengesetzten Zustand der Artikulatorelemente parallel zueinander, insbesondere jeweils parallel zu einer Längsrichtung des Artikulatorelements 1 und/oder dass Artikulatorelements 2 ausgerichtet sein.

Das zweite Artikulatorelement 2 umfasst eine Aufnahme 4 zur Aufnahme des Eingreifmittels 3. Die Aufnahme 4 ist länglich ausgestaltet. Eine Längsrichtung der Aufnahme 4 ist relativ zu einer Längsrichtung des ersten Artikulatorelements 1 und/oder zu einer Längsrichtung des zweiten Artikulatorelements 2 geneigt ausgebildet. Mit anderen Worten: Die Längsrichtung der Aufnahme 4 schließt mit der Längsrichtung des ersten Artikulatorelements 1 und/oder der Längsrichtung zweiten Artikulatorelements 2 einen Winkel ein. Der Winkel ist ungleich 0°, beispielsweise 30°.

Das Eingreifmittel 3 ist in der Aufnahme 4 anbringbar. Insbesondere ist das Eingreifmittel 3 selbsthaltend in der Aufnahme 4 anbringbar. Mit anderen Worten: Das Eingreifmittel 3 kann innerhalb der Aufnahme 4, insbesondere ohne weitere Bauteile, in jeder Bewegungsrichtung des Eingreifmittels 3 gehalten werden. Nochmals anders ausgedrückt: das Eingreifmittel 3 kann sich in jede Bewegungsrichtung des Eingreifmittels 3 innerhalb der Aufnahme 4 an der Aufnahme 4, insbesondere an einer Begrenzung der Aufnahme 4, abstützen.

Das Eingreifmittel 3 ist innerhalb der Aufnahme 4 bewegbar, insbesondere entlang der Längsrichtung der Aufnahme 4 translatorisch bewegbar. Ferner ist das Eingreifmittel 3 innerhalb der Aufnahme 4 rotierbar. Mit anderen Worten: Das erste Artikulatorelement 1 ist über eine Bewegung des Eingreifmittels 3 innerhalb der Aufnahme 4 relativ zum zweiten Artikulatorelement 2 bewegbar. Das erste Artikulatorelement 1 ist mit dem zweiten Artikulatorelement 2 verbindbar, insbesondere über ein Eingreifen des Eingreifmittels 3 in die Aufnahme 4 verbindbar.

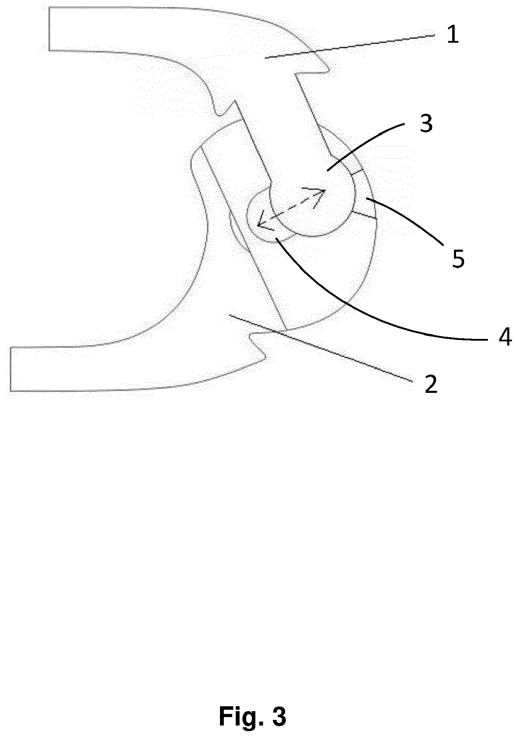

Wie in Figur 3 gezeigt, resultiert eine Translationsbewegung des Eingreifmittels 3 innerhalb der Aufnahme 4, insbesondere entlang der Längsrichtung der Aufnahme 4, in einer Translationsbewegung oder in einer Protrusionsbewegung des ersten Artikulatorelements 1 relativ zum zweiten Artikulatorelement 2, d. h. in einer Bewegung in eine Protrusionsrichtung. Die Protrusionsrichtung ist parallel zu Längsrichtung der Aufnahme 4. Die Protrusionsrichtung schließt einen Winkel mit der Längsrichtung des ersten Artikulatorelements 1 und/oder des zweiten Artikulatorelement 2 ein.

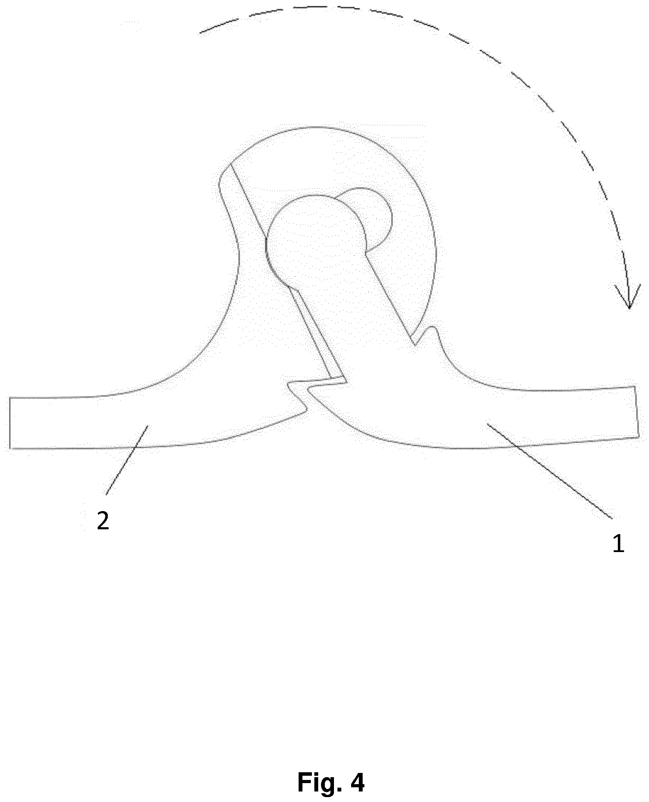

Wie in Figur 4 gezeigt, resultiert eine Rotationsbewegung des Eingreifmittels 3 innerhalb der Aufnahme 4 in eine Rotationsbewegung des ersten Artikulatorelements 1 relativ zum zweiten Artikulatorelement 2 um eine erste Rotationsachse. Die erste Rotationsachse ist senkrecht zur Längsrichtung des ersten Artikulatorelements 1 und/oder des zweiten Artikulatorelements 2. Angeordnet. Die erste Rotationsachse ist senkrecht zur Längsrichtung der Aufnahme 4 angeordnet. Mit anderen Worten: Die erste Rotationsachse ragt aus der Bildebene der Figur 4 heraus. Die Rotationsbewegung des ersten Artikulatorelements 1 relativ zum zweiten Artikulatorelement 2 resultiert in einer Öffnung des Artikulators. Das erste Artikulatorelement 1 und das zweite Artikulatorelement 2, insbesondere die jeweiligen länglichen Abschnitte des ersten Artikulatorelements 1 und des zweiten Artikulatorelements 2, schließen einen Winkel ein. Über die Rotationsbewegung des ersten Artikulatorelements 1 relativ zum zweiten Artikulatorelement 2 um die erste Rotationsachse kann dieser Winkel vergrößert bzw. verkleinert werden. Die Rotationsbewegung des ersten Artikulatorelements 1 relativ zum zweiten Artikulatorelement 2 kann insbesondere einen Winkelbereich von 0° bis 180° umfassen bzw. einschließen.

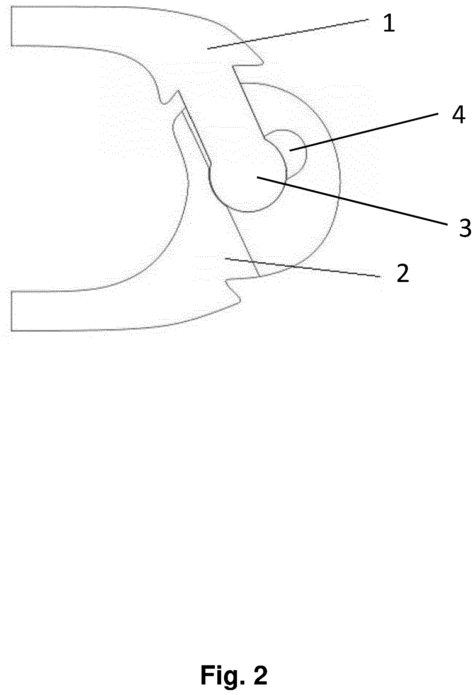

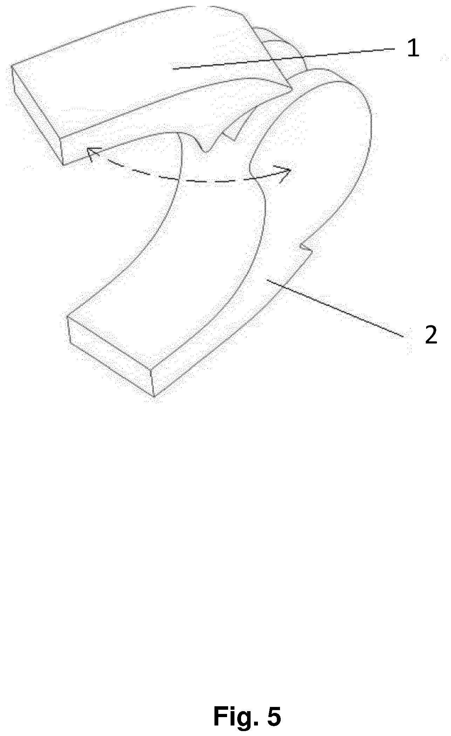

Wie in Figur 5 gezeigt, resultiert ferner eine weitere, zweite Rotationsbewegung des Eingreifmittels 3 innerhalb der Aufnahme 4 in einer Lateralbewegung des ersten Artikulatorelements 1 relativ zum zweiten Artikulatorelement 2, d.h. in einer Bewegung des ersten Artikulatorelements 1 relativ zum zweiten Artikulatorelement 2 in Laterotrusionsrichtung. Mit anderen Worten: Das erste Artikulatorelement 1 ist relativ zum zweiten Artikulatorelement 2 um eine zweite Rotationsachse rotierbar. Die zweite Rotationsachse ist senkrecht zur Längsrichtung des ersten Artikulatorelements 1 und oder des zweiten Artikulatorelements 2 angeordnet. Die zweite Rotationsachse ist ferner senkrecht zur ersten Rotationsachse angeordnet. Mit anderen Worten: Die zweite Rotationsachse liegt in der Bildebene der Figuren 2 bis 4 und 10.

Das erste Artikulatorelement 1 und/oder das zweite Artikulatorelement 2 können mittels 3D-Drucktechnik und/oder Frästechnik hergestellt sein. Das erste Artikulatorelement 1 und das zweite Artikulatorelement 2 sind einstückig ausgebildet und können einstückig mittels 3D-Drucktechnik und schlecht oder Frästechnik hergestellt sein.

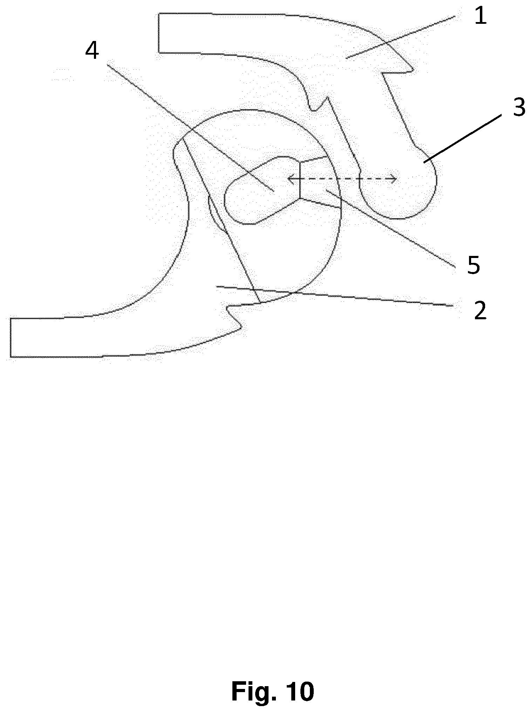

Wie in Figur 10 dargestellt umfasst das zweite Artikulatorelemente 2 eine Öffnung 5. Die Öffnung 5 ist mit der Aufnahme 4 räumlich verbunden. Das Eingreifmittel 3 ist über die Öffnung 5 in die Aufnahme 4 einführbar bzw. in der Aufnahme 4 anbringbar. Die Öffnung 5 kann beispielsweise trichterförmig, pyramidenstumpfförmig oder kegelstumpfförmig ausgebildet sein. Die Öffnung 5 weist einen ersten Querschnitt und einen zweiten Querschnitt auf. Die Öffnung 5 weist einen ersten Umfang oder Durchmesser, beispielsweise den Umfang oder Durchmesser des ersten Querschnitts, und einen zweiten Umfang oder Durchmesser beispielsweise den Umfang oder Durchmesser des zweiten Querschnitts auf. Der erste Umfang oder Durchmesser ist größer als ein Umfang oder Durchmesser des Eingreifmittels 3. Der zweite Umfang oder Durchmesser ist kleiner als ein Umfang oder Durchmesser des Eingreifmittels 3.

Das erste Artikulatorelement 1 und das zweite Artikulatorelement 2 können ganz oder teilweise aus einem flexiblen Material hergestellt sein. Beispielsweise ist das Eingreifmittel 3 aus einem flexiblen Material hergestellt. Beispielsweise ist ein die Öffnung 5 und/oder die Aufnahme 4 umfassender Teil des zweiten Artikulatorelements 2 aus einem flexiblen Material hergestellt. Das flexiblen Material ist beispielsweise ein Kunststoffmaterial, insbesondere ein für den 3D-Druck geeignetes Kunststoffmaterial.

Das Eingreifmittel 3 kann über die Öffnung 5 in die Aufnahme 4 eingeführt bzw. in der Aufnahme 4 eingerastet werden. Mit anderen Worten: Das Eingreifmittel 3 kann auf Höhe des zweiten Querschnitts durch die Aufnahme 5 gedrückt werden. Die Öffnung 5 kann auf Höhe des zweiten Querschnitts durch das Einführen des Eingreifmittels 3 aufgeweitet, insbesondere temporär und/oder unter Kraftaufwand aufgeweitet werden.

Ist das Eingreifmittel 3 innerhalb der Aufnahme 4 angeordnet, so ist das Eingreifmittel 3 nicht durch die Öffnung 5 auf Höhe des zweiten Querschnitts bewegbar, bzw. nicht ohne zusätzlichen Kraftaufwand bewegbar. Derart kann das Eingreifmittel 3 in der Aufnahme 4 selbsthaltend angebracht sein.

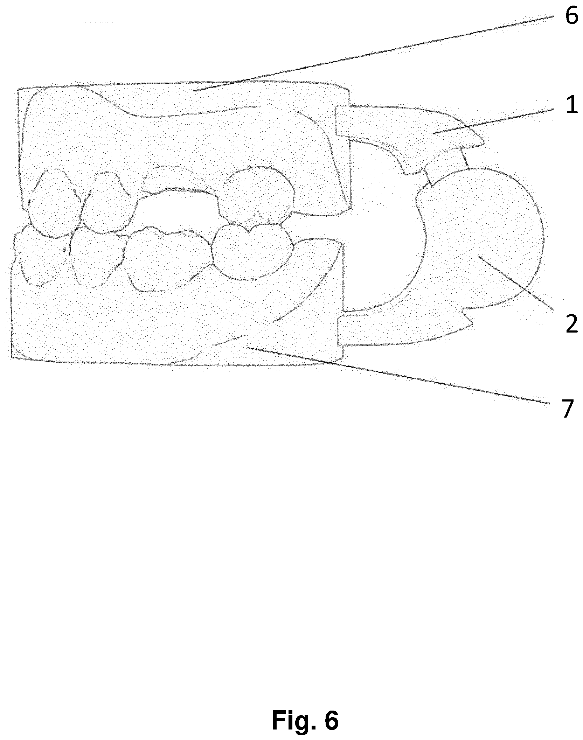

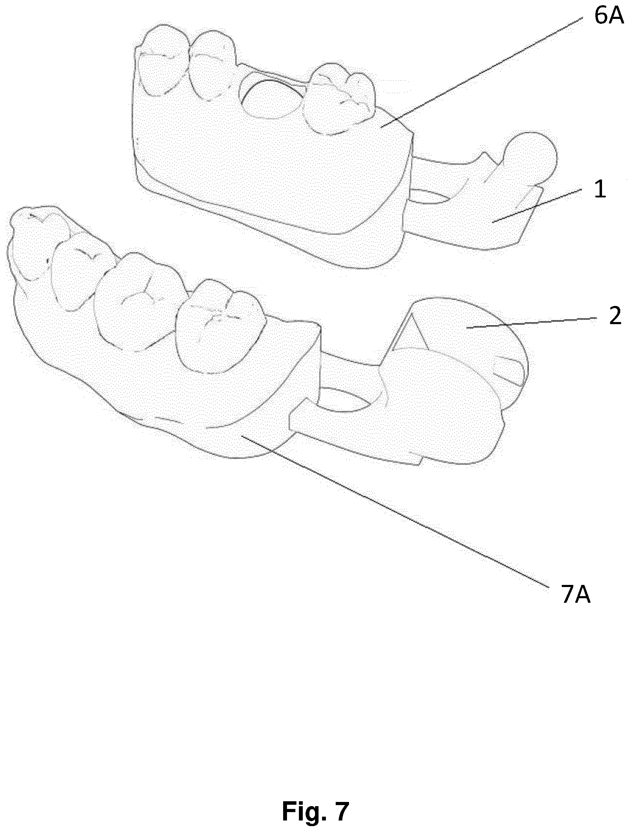

Die Figuren 6 bis 9 zeigen den mit einem oder mehreren Kieferteilmodellen verbundenen Artikulator. Wie in den Figuren 6 und 7 gezeigt ist das erste Artikulatorelement 1 mit einem ersten Kieferteilmodell 6A verbunden, insbesondere einstückig verbunden. Das zweite Artikulatorelement 2 ist mit einem zweiten Kieferteilmodell 7A verbunden, insbesondere einstückig verbunden.

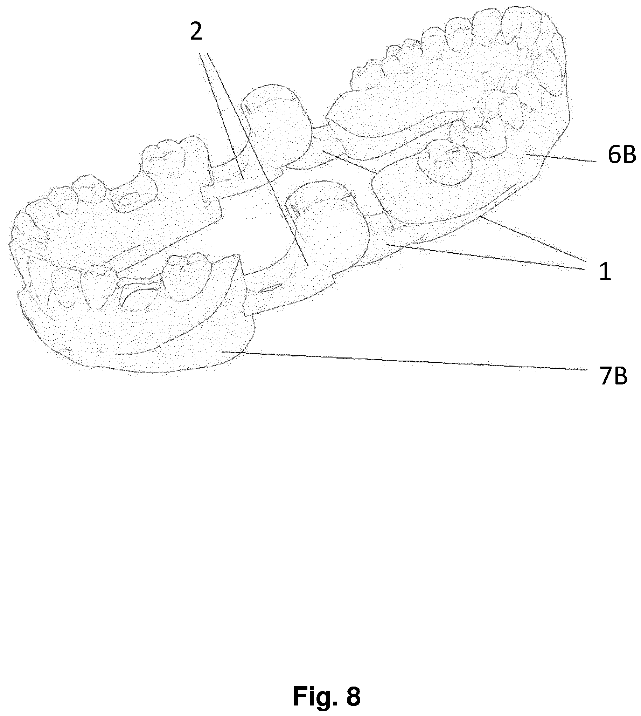

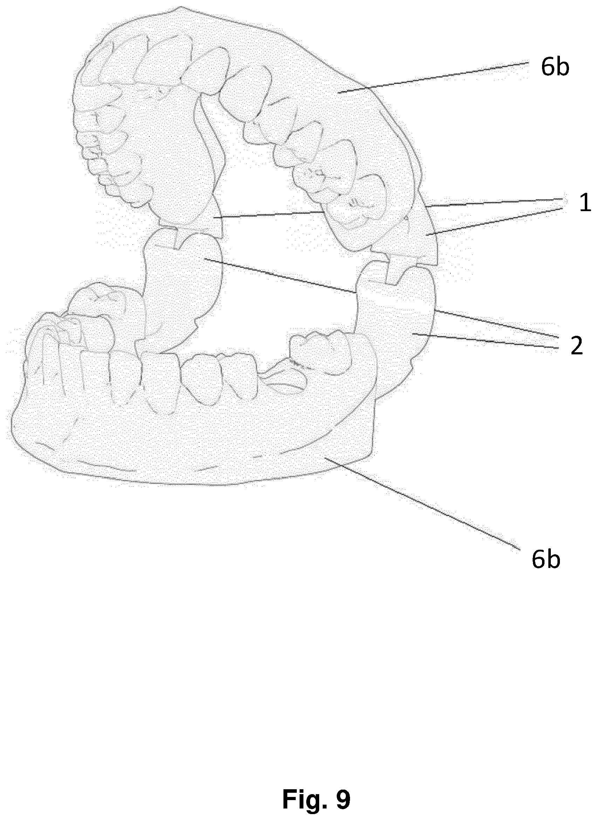

Des Weiteren können zwei erste Artikulatorelemente 1 mit einem dritten Kieferteilmodell 7B verbunden oder einstückig verbunden sein. Ferner können zwei zweite Artikulatorelemente 2 mit einem vierten Kieferteilmodell 7B verbunden oder einstückig verbunden sein, wie in den Figuren 8 und 9 gezeigt. Jeweils eines der zwei ersten Artikulatorelemente 1 ist mit jeweils einem der zwei zweiten Artikulatorelemente 2 verbunden, beispielsweise wie in den Figuren 2 bis 6 gezeigt, über ein jeweiliges Eingreifmittel 3 und eine jeweilige Aufnahme 4.

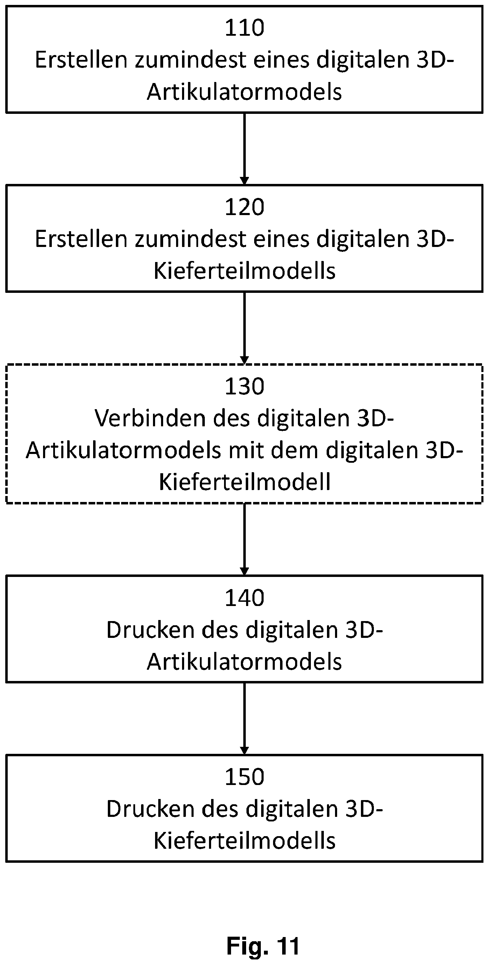

Die Figur 11 zeigt ein Flussdiagramm eines Verfahrens zur Herstellung eines Artikulators, insbesondere eines mit Bezug auf die Figuren 1 bis 10 beschriebenen Artikulators. Das Verfahren ist ein computerimplementiertes Verfahren. Der herzustellende Artikulator umfasst zumindest ein erstes oder das erste Artikulatorelement 1 und ein zweites oder das zweite Artikulatorelement 2.

Ein erster Verfahrensschritt 110 umfasst das Erstellen zumindest eines digitalen 3D-Artikulatormodells. Der Verfahrensschritt 110 umfasst beispielsweise das Erstellen eines ersten digitalen 3D-Artikulatormodells und das Erstellen eines zweiten 3D-Artikulatormodells. Das erste digitale 3D-Artikulatormodell kann für das erste Artikulatorelement 1 erstellt werden und das zweite digitale 3D-Artikulatormodell kann für das zweite Artikulatorelement 2 erstellt werden. Mit anderen Worten: Das erste digitale 3D-Artikulatormodell entspricht dem ersten Artikulatorelement 1 und das zweite digitale 3D-Artikulatormodell entspricht dem zweiten Artikulatorelement 2.

Der Verfahrensschritt 120 umfasst das Erstellen zumindest eines digitalen 3D-Kieferteilmodells. Der Verfahrensschritte 120 umfasst beispielsweise das Erstellen eines ersten digitalen 3D-Kieferteilmodells und/oder eines zweiten digitalen 3D-Kieferteilmodells. Das erste digitalen 3D-Kieferteilmodell kann dem ersten oder dritten Kieferteilmodell 6A, 6B entsprechen. Das zweite digitale 3D Kieferteilmodell kann dem zweiten Kieferteilmodell 7A, 7B entsprechen.

Das erste digitale 3D-Kieferteilmodell kann mit dem ersten digitalen 3D-Artikulatormodell verbunden oder verbindbar sein. Das zweite digitale 3D-Kieferteilmodell kann mit dem zweiten digitalen 3D-Artikulatormodell verbunden oder verbindbar sein. Die Verbindung des ersten bzw. zweiten digitalen 3D-Kieferteilmodells mit den ersten bzw. zweiten digitalen 3D-Artikulatormodell erfolgt digital.

In einem optionalen Verfahrensschritt 130 kann das erste bzw. das zweiten digitalen 3D-Kieferteilmodell mit dem ersten bzw. dem zweiten digitalen 3D-Artikulatormodell digital verbunden werden. Alternativ kann das erste bzw. das zweiten digitalen 3D-Kieferteilmodell mit dem ersten bzw. dem zweiten digitalen 3D-Artikulatormodell einstückig digital erstellt werden oder worden sein.

In Verfahrensschritt 140 wird das erste und/oder zweite digitalen 3D-Artikulatormodell mittels 3D-Drucktechnik gedruckt. In Verfahrensschritt 150 wird das erste und/oder das zweite digitale 3D-Kieferteilmodell mittels 3D-Drucktechnik gedruckt. Die Verfahrensschritte 140 und 150 können in einem gemeinsamen Verfahrensschritt verbunden bzw. realisiert sein. Mit anderen Worten: Das erste digitale 3D-Kieferteilmodell kann gemeinsam, insbesondere einstückig, mit dem ersten digitalen 3D-Artikulatormodell gedruckt werden. Das zweite digitale 3D-Kieferteilmodell kann gemeinsam, insbesondere einstückig, mit dem zweiten digitalen 3D-Artikulatormodell gedruckt werden.

### Weiterführende Beschreibung

Im Folgenden aufgeführt ist eine die obigen Ausführungen ergänzende Beschreibung. Gleiche oder ähnliche Merkmale sind gleich oder ähnlich bezeichnet. Ferner entsprechen die in der ergänzenden Beschreibung verwendeten lateinischen Buchstaben entsprechen wie folgt den oben verwendeten Bezugszeichen: a=1, b=2, c=6A, d=7A, e=6B, f=7B, g=5, h=4:
Artikulatoren sind Geräte zur Simulation der Kiefergelenksbewegung. Dazu werden Gipsmodelle der Zahnbögen des Ober- und Unterkiefers in Okklusion in den Artikulator montiert. Anschließend kann die Bewegung der Kiefer zueinander simuliert werden, was zur Anfertigung von Zahnersatz, Teil- und Totalprothesen oder Schienen unerlässlich ist.

In der modernen Zahnmedizin werden aber immer häufiger digitale Abdrücke genommen. Der Zahnarzt verwendet hierfür einen Intraoralscanner um 3Dimensionale Datensätze zu erzeugen. Das Dentallabor kann mit einer speziellen Design- und Konstruktionssoftware an Hand dieser Daten (meist *.stl Format) den Zahnersatz digital konstruieren und in einem weiteren Schritt von Maschinen fräsen oder drucken (3D Drucker) lassen. Häufig werden aber auch in diesen Fällen Kiefermodelle benötigt um dem Zahnersatz ein hochwertiges Ergebnis zu verleihen. Diese Modelle werden dann in den meisten Fällen mittels 3D Drucker gefertigt. Diese gedruckten Ganzkiefer- oder Teilmodelle müssen anschließend wie die herkömmlichen Gipsmodelle in einem Artikulator montiert werden.

Figur 1 zeigt einen Artikulator (künstliches Kiefergelenk) der von mir speziell für 3D gedruckte Kiefermodelle entwickelt wurde. Dieser ist in der Dentalsoftware als Datensatz hinterlegt und kann wenn Ober- und Unterkiefermodell virtuell erstellt wurden, wie an Figur 6 zu sehen angefügt werden. Hierbei spielt es keine Rolle, ob es sich wie in Figur 6 um ein Teilmodell handelt, da ich wie in Figur 8 zu sehen auch eine Lösung für Ganzkiefermodelle mit 2 Gelenken entwickelt habe, die mit verschiedenen Abständen zueinander, in der Software hinterlegt sind um bei unterschiedlichen Kiefergrößen variieren zu können.

Der Artikulator besteht aus zwei Elementen a und b Figur 1 die in der Software lagerichtig in Bezug zueinander stehen aber nicht verbunden sind. Figur 6 zeigen Oberkiefermodell (c) und Unterkiefermodell (d) sind in der Software ebenso lagerichtig zueinander und auch nicht verbunden. Figur 2, 3, 4 und 10 zeigen den Querschnitt des 3D druckfähige Artikulators um die Funktionen zu verdeutlichen. Die Software ist so programmiert, dass der Artikulator mit den Modellen verbunden werden kann. So entstehen zwei druckfähige Datensätze wie das Oberkieferteilmodell (c) mit angefügtem Element (a) und Unterkieferteilmodell (d) mit angefügtem Element (b) wie in Figur 6 zu sehen. Nach der Fertigung können beide Modellteile mittels Steckverbindung verbunden werden. Der Kugelkopf von Element (a) kann sich nun in einen geneigten halbrunden Aussparung hin- und her (Laterotrusion) schwenken lassen (Figur 5).

Durch die geneigte, längliche Aussparung kann sich das Unterkiefermodell zusätzlich nach vorne und unten (Protrusion) bewegen wie die Querschnitts Darstellung Figur 3 zeigt. Der Vorteil dieser Erfindung liegt darin, dass eine nachträgliche Montage in einem herkömmlichen Laborartikulator nicht mehr nötig ist. Zusätzlich kann der gedruckte Artikulator dank seines innovativen Design so weit geöffnet werden, dass beide Kiefermodelle flach auf dem Arbeitstisch liegen und die Arbeit für den Zahntechniker so deutlich erleichtert wird wie in der Querschnittansicht Figur 4 und in der Schrägansicht Figur 8 zu sehen ist. Figur 8 und Figur 9 zeigen Ganzkiefermodelle die mit 2 meiner Artikulatoren (künstlichen Kiefergelenken) ausgestattet sind, die den wirklichen Bewegungsabläufen im menschlichen Schädel noch näher kommen. Die Qualität wird hierdurch nochmals verbessert und ist zugleich eine kostengünstige Lösung, da die Montage in einem handelsüblichen Artikulator auch in dieser Variante eingespart werden kann.

Figur 7 zeigt das Oberkieferteilmodell (c) in Kombination mit dem Artikulatorelement (a) und das Unterkieferteilmodell (d) in Kombination mit Artikulatorelement (b) . Figur 10 zeigt in einer Querschnittdarstellung wie Artikulatorelement (a) mit seinem Kugelkopf in die Trichterförmige Aussparung (g) gepresst wird, um in die längliche und geneigte Aussparung (h) in Artikulatorelement (b) zu gleiten. Seine Ausgangslage ist in der Querschnittansicht in Figur 2 gut zu erkennen. Der Schutzansprüche 1 bis 5 bezieht sich darauf, dass es aktuell noch keinen druck- oder fräsbaren Artikulator gibt der Laterotrusions- und Protrusionsbewegungen zulässt. Dieses Problem wird mit den in den Schutzansprüchen 1 bis 5 aufgeführten Merkmal gelöst. Mit der Erfindung wird erreicht, dass jedes Dentallabor oder Zahnarztpraxis die über entsprechende Dentalsoftware verfügen, kostengünstig druck- und fräsfähige Modell erstellen können ohne diese nach der Fertigung noch in einen handelsüblichen Artikulator montieren zu müssen.

Insbesondre ist also beschrieben ein Artikulator (Datensatz für 3D Druck und Frästechnik) aus Artikulatorelement (a) und (b) bestehend dadurch gekennzeichnet, dass er der erste druck- oder fräsbare Artikulator ist der die Protrusionsbewegung wie in Figur 3 und auch die Laterotrusionsbewegung wie in Figur 5 dargestellt nach der Fertigung zulässt.

Ferner ist beschrieben ein Artikulator (Datensatz für 3D Druck und Frästechnik) aus Artikulatorelement (a) und (b) bestehend dadurch gekennzeichnet, dass er sich als einzelnes Gelenk wie in Figur 6 dargestellt, an virtuell erstellte Ober- und Unterkieferteilmodell anfügen lässt, die dann mittels 3D Drucker oder Fräsmaschine gefertigt werden können.

Ferner ist beschrieben ein Artikulator (Datensatz für 3D Druck und Frästechnik) aus Artikulatorelement (a) und (b) bestehend dadurch gekennzeichnet, dass er sich auch in doppelter Variante, wie in Figur 8 und Figur 9 an virtuell erstellte Ganzkiefermodelle anfügen lässt, die dann mittels 3D Drucker oder Fräsmaschine gefertigt werden können.

Ferner ist beschrieben ein Artikulator (Datensatz für 3D Druck und Frästechnik) aus Artikulatorelement (a) und (b) bestehend dadurch gekennzeichnet, dass sich der Kugelkopf von Artikulatorelement (a) in der länglichen und geneigten Aussparung (h) in Element (b) nach der Fertigung durch einen 3D Drucker oder durch eine Fräsmaschine zur Seite schwenken lässt (Lateralbewegung) und nach vorn unten oder hinten oben was der Protrusionsbewegung (Figur 3) im menschlichen Kiefergelenk nachempfunden ist.

Ferner ist beschrieben ein Artikulator (Datensatz für 3D Druck und Frästechnik) aus Artikulatorelement (a) und (b) bestehend dadurch gekennzeichnet, dass sich in Figur 10 Artikulatorelement (b) eine Trichterförmige Aussparung (g) befindet in die der Kugelkopf von Artikulatorelement (a) mit etwas Kraft hineingepresst wird, bis er in der länglichen und geneigten Aussparung (h) für eine geführte Protrusion einrastet.

### Bezugszeichenliste

- 1: Erstes Artikulatorelement
- 2: Zweites Artikulatorelement
- 3: Eingreifmittel des ersten Artikulatorelements
- 4: Aufnahme des zweiten Artikulatorelements
- 5: Öffnung des zweiten Artikulatorelements
- 6A: Ersten Kieferteilmodell
- 6B: Drittes Kieferteilmodell
- 7A: Zweites Kieferteilmodell
- 7B: Viertes Kieferteilmodell

## Patentansprüche

1. Artikulator zur Simulation einer Kiefergelenksbewegung, der Artikulator umfassend ein erstes Artikulatorelement (1) und ein zweites Artikulatorelement (2), wobei das erste Artikulatorelement (1) ein Eingreifmittel (3) umfasst und das zweite Artikulatorelement (2) eine Aufnahme (4) für das Eingreifmittel (3) umfasst.

2. Artikulator nach Anspruch 1, wobei das erste Artikulatorelement (1) und/oder das zweite Artikulatorelement (2) einstückig ausgebildet ist; Insbesondere wobei das erste Artikulatorelement (1) und/oder das zweite Artikulatorelement (2) mittels 3D-Drucktechnik und/oder mittels Frästechnik gefertigt ist..

3. Artikulator nach einem der vorangehenden Ansprüche, wobei das mit dem zweiten Artikulatorelement (2) verbundene erste Artikulatorelement (1) relativ zu dem zweiten Artikulatorelement (2) in eine Protrusionsrichtung bewegbar ist und/oder in eine Laterotrusionsrichtung bewegbar ist.

4. Artikulator nach einem der vorangehenden Ansprüche, wobei das mit dem zweiten Artikulatorelement (2) verbundene erste Artikulatorelement (1) relativ zu dem zweiten Artikulatorelement (2) in eine Rotationsrichtung rotierbar ist, insbesondere um eine Rotationsachse rotierbar ist, wobei die Rotationsachse senkrecht zu der oder einer Protrusionsrichtung und/oder senkrecht zu der oder einer Laterotrusionsrichtung angeordnet ist oder wobei die Rotationsachse parallel zu der oder einer Laterotrusionsrichtung angeordnet ist.

5. Artikulator nach einem der vorangehenden Ansprüche, wobei das Eingreifmittel (3) kugelförmig ausgestaltet ist und/der wobei das Eingreifmittel (3) selbsthaltend in der Aufnahme (4) anbringbar ist.

6. Artikulator nach einem der vorangehenden Ansprüche, wobei die Aufnahme (4) länglich ausgebildet ist, insbesondere wobei die Aufnahme entlang oder parallel zu der oder einer Protrusionsrichtung angeordnet ist.

7. Artikulator nach einem der vorangehenden Ansprüche, wobei das zweite Artikulatorelement (2) eine Öffnung (5) umfasst und das Eingreifmittel über die Öffnung (5) in der Aufnahme (4) anbringbar und/oder in die Aufnahme (4) einführbar ist, insbesondere wobei das Eingreifmittel über die Öffnung (5) in der Aufnahme (4) einrastbar ist.

8. Artikulator nach Anspruch 7, wobei die Öffnung (5) einen ersten Öffnungsdurchmesser umfasst, der kleiner ist als ein Durchmesser des Eingreifmittels, insbesondere wobei die Öffnung (5) trichterförmig ausgebildet ist und/oder wobei die Öffnung (5) einen zweiten Öffnungsdurchmesser umfasst, der größer ist als ein Durchmesser des Eingreifmittels.

9. Artikulator nach einem der vorangehenden Ansprüche, wobei das erste Artikulatorelement (1) und/oder das zweite Artikulatorelement (2) zumindest teilweise aus einem elastischen Material gefertigt ist, insbesondere wobei das Eingreifmittel (3) und/oder die Öffnung und/oder ein die Öffnung (5) umfassender Teil des zweiten Artikulatorelements (2) aus dem elastischen Material gefertigt ist.

10. Artikulator nach einem der vorangehenden Ansprüche, wobei das erste Artikulatorelement (1) mit einem ersten Kieferteilmodell (6A, 6B), verbindbar oder verbunden, insbesondere einstückig verbunden, ist und/oder wobei das zweite Artikulatorelement (2) mit einem zweiten Kieferteilmodell (7A, 7B) verbindbar oder verbunden, insbesondere einstückig verbunden, ist.

11. Artikulator nach einem der vorangehenden Ansprüche, der Artikulator umfassend zwei erste Artikulatorelemente (1) und zwei zweite Artikulatorelemente (2), wobei die zwei ersten Artikulatorelemente (1) jeweils mit dem oder einem ersten Kieferteilmodell (6A, 6B) verbindbar oder verbunden, insbesondere einstückig verbunden, sind und wobei die zwei zweiten Artikulatorelemente (2) jeweils mit dem oder einem zweiten Kiefermodell (7A, 7B) verbindbar oder verbunden, insbesondere einstückig verbunden, sind.

12. Computerimplementiertes Verfahren zur Herstellung eines Artikulators, insbesondere zur Herstellung des Artikulators nach einem der vorangehenden Ansprüche, das Verfahren umfassend:
Erstellen (110) eines ersten digitalen 3D-Artikulatormodells und/oder Erstellen eines zweiten digitalen 3D-Artikulatormodells;
Drucken (140) des ersten/und oder des zweiten digitalen 3D-Artikulatormodells mittels 3D-Drucktechnik.

13. Verfahren nach Anspruch 12, ferner umfassend:
Erstellen (120) eines ersten digitalen 3D-Kieferteilmodels (6) und/oder Erstellen eines zweiten 3D-Kieferteilmodels , wobei das erste digitale 3D-Kieferteilmodell mit dem ersten digitalen 3D-Artikulatormodell verbunden oder verbindbar ist und/oder wobei das zweite digitalen 3D-Kieferteilmodell mit dem zweiten digitalen 3D-Artikulatormodell verbunden oder verbindbar ist, insbesondere wobei das Verfahren ferner umfasst das Verbinden (130) des ersten digitalen 3D-Kieferteilmodells mit dem ersten digitalen 3D-Artikulatormodell und/oder das Verbunden des ersten digitalen 3D-Kieferteilmodells mit dem ersten digitalen 3D-Artikulatormodell;
wobei das Drucken (140) des ersten/und oder des zweiten digitalen 3D-Artikulatormodells das Drucken (150), insbesondere einstückige Drucken, des ersten digitalen 3D-Kieferteilmodells und des ersten digitalen 3D-Artikulatormodells und/oder das Drucken, insbesondere einstückiges Drucken, des zweiten digitalen 3D-Kieferteilmodells und des zweiten digitalen 3D-Artikulatormodells umfasst.

14. System zur Datenverarbeitung, umfassend Mittel zur Ausführung des Verfahrens nach Anspruch 12 oder 13.

15. Computerlesbares Speichermedium, umfassend Befehle, die bei der Ausführung durch das System nach Anspruch 14 dieses veranlassen, das Verfahren nach Anspruch 12 oder 13 auszuführen.
